# EUROPÄISCHE PATENTSCHRIFT

(11) **EP 0 528 371 B1**
(45) Veröffentlichungstag und Bekanntmachung des Hinweises auf die Patenterteilung: **25.10.1995**
(21) Anmeldenummer: 92113891.3
(22) Anmeldetag: 14.08.1992
(51) Int. Cl.: H02B 1/052

(54) **Zur Wand- oder Bodenbefestigung geeignetes Gehäuse**
Cabinet suitable for wall or floor mounting
Boîtier pour fixation murale ou au sol

(30) Priorität: 17.08.1991 DE 4127253
(43) Veröffentlichungstag der Anmeldung: 24.02.1993
(73) Patentinhaber: Gossen- Metrawatt GmbH, D-8500 Nürnberg (DE)
(72) Erfinder: Feuerlein, Friedrich, W-8500 Nürnberg 50 (DE); Müller, Helmut, W-8500 Nürnberg 80 (DE)
(74) Vertreter: Hafner, Dieter, Dr.rer.nat., Dipl.-Phys.

(56) Entgegenhaltungen:
- EP-A- 0 373 627
- DE-A- 2 912 076
- DE-A- 3 149 310
- DE-A- 3 732 434
- DE-B- 1 143 251
- DE-U- 8 122 024
- FR-A- 2 219 515
- FR-A- 2 652 205

## Beschreibung

Die Erfindung betrifft ein Gehäuse für Geräte in elektrischen Anlagen, gemäß dem Oberbegriff des Anspruchs 1 (DE-A-2 912 076)

Zur Wandbefestigung von Gehäusen, z.B. für Meßumformer oder Schaltgeräte, verwendet man bevorzugt an einer Wandfläche montierte Profilschienen, an denen die Gehäuse mit Hilfe einer Klemmvorrichtung angebracht werden können. Die zur Klemmvorrichtung gehörigen Klemmelemente sind in der Regel am Bodenteil derartiger Gehäuse befestigt und erfassen die Profilschiene zangenartig, wobei Federmittel für die benötigten Zangenkräfte sorgen.

Trotz der Dominanz bestimmter Profilschienen, insbesondere der sog. Hutschiene, ist es ein Ziel des Geräteherstellers, dem Anwender auch ausgefallene Befestigungsmöglichkeiten offenzuhalten. Zur Anpassung an die gewünschte Befestigungsart müßte jedoch bei bekannten Geräten entweder ein komplett anderes Gehäuse verwendet werden oder es wäre die mit den spezifischen Befestigungsteilen versehene Bodenplatte des Gehäuses auszutauschen.

Aufgabe der Erfindung ist es, ein Gehäuse der im Oberbegriff des Anspruchs 1 genannten Art dahingehend zu verbessern, daß ein sehr einfaches und schnelles Öffnen und Schließen des Gehäuses ohne Mittel zum Schrauben erreicht wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Das angestrebte Ziel, einer vereinfachten Anpassung an unterschiedliche Befestigungsmöglichkeiten, wird erfindungsgemäß mit Hilfe eines austauschbaren Befestigungsadapters erreicht, der an die Art der vorgesehenen Wand- oder Bodenbefestigung angepaßt ist und leicht am Gehäuse angebracht werden kann.

Hierzu ist vorgesehen, das den Befestigungsadapter haltende Bodenteil so zu gestalten, daß es auf den Gehäusekörper aufschiebbar ist, wozu am Gehäusekörper einerseits und am Bodenteil andererseits ineinandergreifende Gleitschienen und Gleitnuten vorzusehen sind, wobei das Bodenteil aus zwei, vorzugsweise identisch ausgebildeten Bodenhalbteilen besteht, die von zwei sich gegenüberliegenden Seiten auf den Gehäusekörper aufgeschoben werden können und in der Gehäusemitte mit ihren Stoßkanten aufeinandertreffen.

Hierzu besitzt das Bodenteil vorzugsweise die Form einer flachen Schale, die durch ihre Trennung in die beiden Bodenhalbteile an einer Seite zum Aufschieben geöffnet ist. Die zum Aufschieben der beiden Bodenhalbteile ohnehin benötigten Gleitelemente wirken dabei wie eine mäanderförmige Dichtung, so daß das Gehäuse auch gut gegen Staub geschützt ist.

Zwei zusätzliche, parallel zu den beiden in Gleitrichtung liegenden Seitenwänden des Gehäuses angeordnete Leitschienen an den Bodenhalbteilen bilden für die Enden der hier eingreifenden Gehäusewände eine Laufnut und sorgen für eine ausreichende Seitenstabilität der Gehäusewände.

Um auch im Bereich der Stoßkante der beiden Bodenhalbteile eine gute Abdichtung nach außen zu erreichen, ist jede Bodenwand im Bereich ihrer Stoßkante mit einer Überlappungszunge versehen, die die halbe Breite und die halbe Wanddicke der übrigen Bodenwand besitzt und stufig so versetzt ist, daß zwei aufeinandertreffende, in ihrer Wandstärke halbierte Überlappungszungen sich zur Wandstärke der übrigen Bodenwand überlappend ergänzen.

Eine sichere Verbindung der beiden Bodenhalbteile zu einem gemeinsamen Bodenteil wird dadurch erreicht, daß im Bereich der jeweiligen Stoßkante jeweils ein Rasthaken und eine den Rasthaken verankernde Rastauflage vorgesehen ist, die beim Aufeinandertreffen der beiden Bodenhalbteile miteinander verrasten.

Um eine sichere Verbindung des Befestigungsadapters mit dem Bodenteil zu erreichen, sind auf der Außenseite der Bodenhalbteile entlang ihrer Gleitrichtung Haltezapfen angeformt, zwischen denen und der Bodenwand Haltenuten liegen. In diese passen zu einem Befestigungsadapter gehörige Gleitnocken, die an einem Schienenhalter angeformt sind.

Ein bequemes Aufsetzen des Befestigungsadapters auf das Bodenteil wird dadurch erreicht, daß die Haltezapfen und die Gleitnocken jeweils in einem solchen Abstand zueinander angeordnet sind, daß die Gleitnocken zwischen den Haltezapfen Platz finden, so daß beide zahnartig ineinandergreifen und durch eine kurze Parallelverschiebung zur Ebene der Bodenwand, die Gleitnocken innerhalb der Haltenuten bis zu einem Anschlag gleiten können.

Eine Arretierung des Befestigungsadapters am Bodenteil wird mit Hilfe einer Federlasche erreicht, die in einer Grundplatte des Schienenhalters durch eine Aussparung freigelegt ist. Die Federlasche besitzt eine Vertiefung, in die je ein im Bereich der Stoßkante an dem jeweiligen Bodenhalbteil angeformter, über die Ebene der Bodenwand hinausragender Haltenocken eintaucht. Da die Vertiefung beide Haltenocken erfaßt, werden gleichzeitig auch die beiden Bodenhalbteile zusammengehalten.

In einer Weiterbildung des Erfindungsgegenstandes wird eine besonders vorteilhafte Klemmvorrichtung für eine Hutschienenbefestigung geschaffen. Hierzu sind auf der vom Gehäuse abgewandten äußeren Seite der Grundplatte des Schienenhalters, an seinen beiden Enden je zwei in Gleitrichtung liegende Führungsleisten angeordnet, die zur Innenseite hin abgewinkelt sind und mit der Grundplatte zwei sich gegenüberliegende Führungsnuten bilden, die zur Aufnahme eines Klemmteils und eines Arretierteils dienen.

Das Klemmteil dient dabei zur lösbaren Befestigung des Gehäuses an einer Profilschiene, derart, daß zwei Klemmteile die Profilschiene beidseitig zangenartig erfassen. Hierbei werden die Klemmteile durch Federkraft in ihrer Klemmstellung gehalten und können zum Lösen entgegen der Wirkung dieser Federkraft in eine Öffnungsstellung verschoben werden. Das Arretierteil ist mit dem Klemmteil so verbunden, daß beide Teile zueinander und gegenüber dem Schienenhalter verschiebbar sind und daß sie mindestens zwei, den gegenseitigen Abstand definierende Stellungen einnehmen können. Ein besonderer Vorteil dieser Anordnung ist, daß das Klemmteil in einer dieser Stellungen durch das Arretierteil so blockiert ist, daß es sich nicht mehr in die Öffnungsstellung zum Lösen von der Profilschiene verschieben läßt.

In zweckmäßiger Ausbildung der Kopplung des Arretierteils mit dem Klemmteil besitzt mindestens eines der beiden Teile einen Greifarm, der an einem Greifansatz des anderen Teils so angreift, daß hierdurch der maximale Abstand zwischen den beiden Teilen definiert ist. Der gegenseitige Abstand kann jedoch durch Verschieben der beiden Teile aufeinander zu, entgegen der Federkraft einer sie auseinanderdrückenden Feder, vorzugsweise einer Schraubenfeder, verringert werden.

Die verschiedenen Stellungen der beiden Teile zueinander werden durch mehrere Anschläge bestimmt, die zur Stellungsänderung gegebenenfalls durch federnde Rastmittel gebildet sind. In einer ersten, das Klemmteil blockierenden Stellung wird das Arrtierteil so dicht an das Klemmteil herangeführt, daß es dessen Verschiebung in die Öffnungsstellung verhindert. Diese Arretierstellung des Befestigungsadapters gewährleistet auch unter ungünstigen Bedingungen, zum Beispiel bei starken Vibrationen, eine gegen Selbstlösung sichere Befestigung des Gehäuses an der Profilschiene.

Bei einer zweiten Stellung ist der Abstand zwischen den beiden Teilen so festgelegt, daß das Klemmteil gegen die Kraft der die Teile auseinanderdrückenden Feder in die Öffnungsstellung verschiebbar ist. Diese Stellung entspricht in ihrer Wirkung somit bekannten Ausführungen, bei denen das Gehäuse in einer Richtung gegen die Kraft einer Feder gezogen werden muß, um eines der beiden Klemmteile von der Hutschiene lösen zu können. Dies ist allerdings nur mit Hilfe einer Schwenkbewegung realisierbar, wobei das Gehäuse um die Eingriffstelle des anderen Klemmteils herumgeschwenkt werden muß.

Bei unmittelbar an einer Wand befestigten Profilschienen ist eine derartige Schwenkbewegung jedoch nicht durchführbar, so daß in Weiterbildung des Erfindungsgegenstandes eine dritte Stellung vorgesehen ist, bei der der Abstand zwischen den beiden Teilen dem durch mindestens einen Greifarm bestimmten maximalen Abstand entspricht, so daß durch gemeinsames Verschieben der beiden Teile das Klemmteil ohne Überwindung einer Federkraft in die Öffnungsstellung verschoben werden kann. Die auf beiden Seiten zurückgezogenen Klemmteile ermöglichen nunmehr ein schwenkfreies Abnehmen des Gehäuses von der Profilschiene.

Bei einer zweckmäßigen Ausbildung des Klemmteils besitzt dieses einen Keilbalken, der eine die Profilschiene erfassende Klemmkante bildet und einen Klemmkörper, der vom Keilbalken beidseitig überragt wird, so daß die auf der Rückseite des Keilbalkens liegenden Balkenschultern einen Anschlag bilden, der in der Öffnungsstellung an den Führungsleisten anschlägt.

Einen zweiten, die Verschlußstellung des Klemmteils definierenden Anschlag kann in zweckmäßigerweise mindestens ein Gleithaken bilden, der beim Einschieben des Klemmteils in die Führungsnuten, in ein zugehöriges Rastloch der Grundplatte des Schienenhalters eingreift und in Klemmrichtung ein unerwünschtes Herausgleiten des Klemmteils aus den Führungsnuten verhindert. Die Gleithaken liegen in Hakenfenstern, die ihrerseits im Klemmkörper des Klemmteils ausgespart sind. Ein weiterhin im Klemmkörper vorgesehenes Federloch dient zur einseitigen Lagerung der zwischen Klemmteil und Arretierteil angeordneten Feder.

Vorteilhaft ist es, das Arretierteil so auszubilden, daß es entsprechend dem Klemmteil mit Führungsschienen in den Führungsnuten gleitbeweglich angeordnet ist und die zur Kopplung mit dem Klemmteil benötigten Greifarme trägt. An ihrem am Gleitkörper befestigten Ende sind die Greifarme mit Greifarmschultern versehen, die zusammen mit einem in jeder Führungsnut ausgebildeten Nutanschlag in Öffnungsrichtung ein Herausgleiten des Arretierteils aus der Führungsnut verhindern.

Um das Arretierteil in verschiedenen Raststellungen verankern zu können, besitzt es eine in einem Laschenfenster schwingbeweglich angeordnete, federnde Arretierlasche, die mindestens mit einem Rastzahn versehen ist, der in eine Rastmulde eingreift und an einer Anschlagkante anschlägt. Am freien Ende der Arretierlasche ist ein Betätigungssteg vorgesehen, der einen Zugriff solcher Art erlaubt, daß die Arretierlasche entgegen ihrer Federkraft aus ihrer Anschlagstellung befreit wird und damit eine Verschiebung des Arretierteils ermöglicht.

Besonders vorteilhaft ist es, das Arretierteil weiterhin so auszubilden, daß es in der dritten Stellung der beiden Teile mit seinem freien Ende über das Ende des Schienenhalters und damit auch über die Grundfläche des Gehäusekörpers hinausragt und in dieser Stellung die Möglichkeit bietet, über entsprechende im Arretierteil vorgesehene Löcher eine Schraubbefestigung des Gehäuses vorzunehmen.

Ausführungsbeispiele der Erfindung sind in den Zeichnungen dargestellt und werden im folgenden näher beschrieben.

Es zeigen:
- Fig. 1: Ein Gehäuse mit Befestigungsvorrichtung seitlich im Schnitt,
- Fig. 2: das Gehäuse nach Fig. 1 von unten gesehen mit Blick auf die Befestigungsvorrichtung,
- Fig. 3: das Gehäuse nach Fig. 1 in einer zweiten Seitenansicht,
- Fig. 4: einen Gehäusekörper ohne Befestigungsvorrichtung seitlich im Schnitt,
- Fig. 5: den Gehäusekörper nach Fig. 4 von unten gesehen,
- Fig. 6: den Gehäusekörper in einer zweiten Seitenansicht im Schnitt,
- Fig. 7: ein Bodenhalbteil in Draufsicht auf die Außenseite,
- Fig. 8: das Bodenhalbteil nach Fig. 7 um 90 Grad geschwenkt in Seitansicht,
- Fig. 9: das Bodenhalbteil in einer zweiten Seitenansicht im Schnitt entlang der Schnittlinie B-B nach Fig. 7,
- Fig. 10: das Bodenhalbteil in Draufsicht auf die Innenseite,
- Fig. 11: das Bodenhalbteil seitlich im Schnitt entlang der Schnittlinie C-C,
- Fig. 12: ein kommlett montierter Befestigungsadapter in Draufsicht,
- Fig. 13: der Befestigungsadapter seitlich im Schnitt,
- Fig. 14: der Befestigungsadapter in einer zweiten Seitansicht im Schnitt,
- Fig. 15: ein Schienenhalter seitlich gesehen,
- Fig. 16: der Schienenhalter in Draufsicht auf seine dem Gehäuse zugewandte Innenseite,
- Fig. 17: der Schienenhalter seitlich im Schnitt entlang der Schnittlinie B-B nach Fig. 16.
- Fig. 18: der Schienenhalter in einer zweiten Seitenansicht im Schnitt entlang der Schnittlinie A-A nach Fig. 16,
- Fig. 19: ein Arretierteil in Seitenansicht,
- Fig. 20: das Arretierteil in Draufsicht auf seine dem Gehäuse zugewandte Innenseite,
- Fig. 21: das Arretierteil in einer zweiten Seitenansicht,
- Fig. 22: das Arretierteil in einer dritten Seitenansicht im Schnitt,
- Fig. 23: ein Klemmteil in Seitenansicht,
- Fig. 24: das Klemmteil in Draufsicht auf seine dem Gehäuse zugewandte Innenseite,
- Fig. 25: das Klemmteil seitlich im Schnitt entlang der Schnittlinie A-A nach Fig. 24.

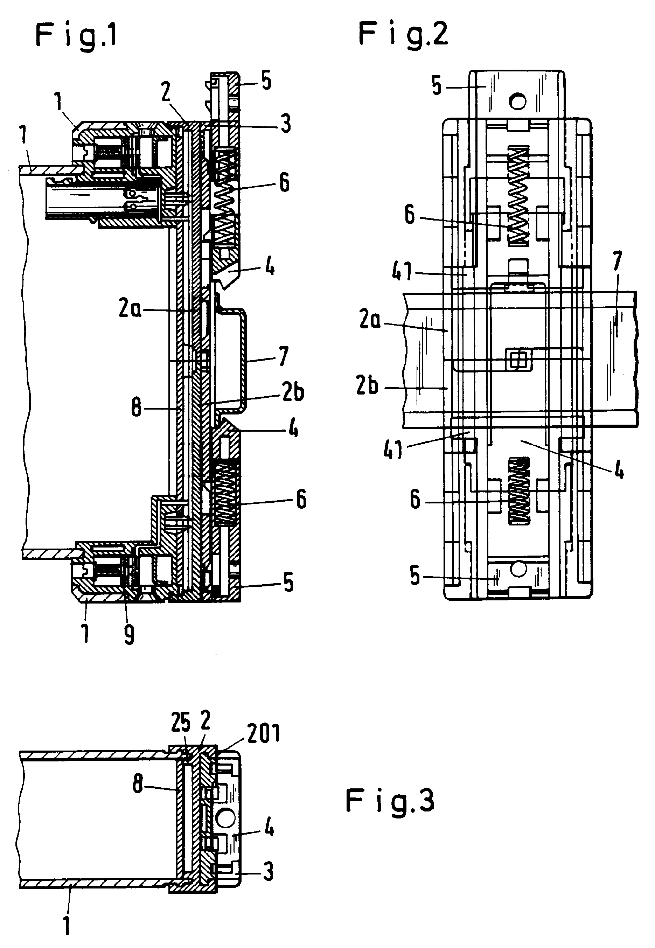

Wie die Figuren 1-3 erkennen lassen, ist ein aus einem Gehäusekörper 1 und einem Bodenteil 2 bestehendes Gerätegehäuse 1, 2 mit einem Befestigungsadapter 3-6 ausgestattet, der an die Art der für das Gerätegehäuse 1, 2 vorgesehenen Wand- oder Bodenbefestigung angepaßt ist. Im vorliegenden Beispiel ist der Befestigungsadapter 3-6 so gestaltet, daß das Gerätegehäuse 1, 2 an einer Profilschiene 7, die hier als Hutschiene ausgeführt ist, befestigt werden kann.

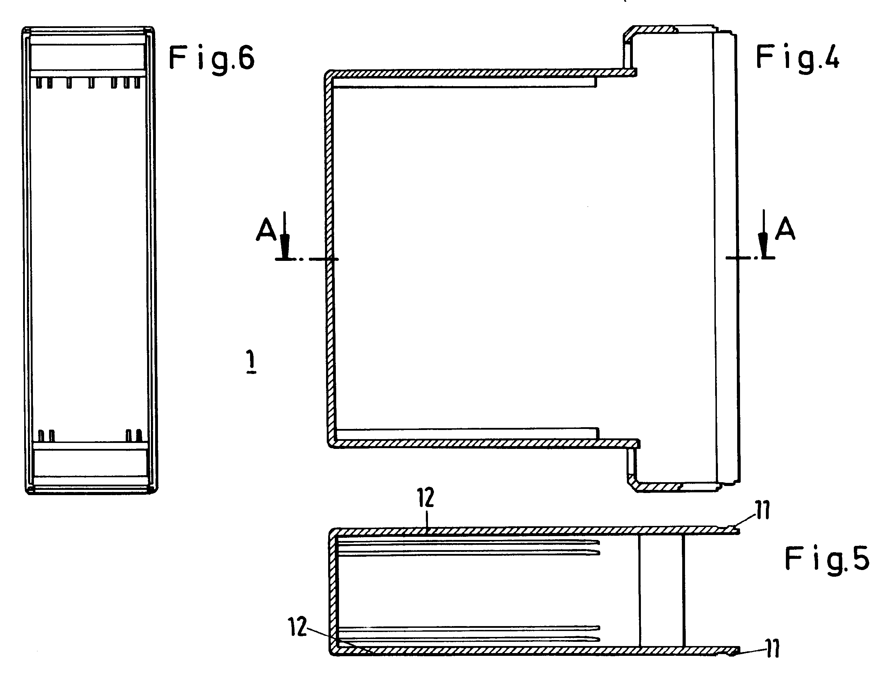

Der in den Figuren 4-6 dargestellte Gehäusekörper 1 dient zur Aufnahme eingeschobener Leiterplatten 8 und Anschlußklemmen 9, was hier nicht näher beschrieben werden soll, da diese Details für die Erfindung keine Bedeutung haben. Eine das Einschieben der Leiterplatten 8 ermöglichende Öffnung liegt im Bodenbereich des Gehäusekörpers 1, der an den freien Enden zweier sich gegenüberliegender Gehäusewände mit jeweils einer nach außen weisenden Gleitschiene 11 versehen ist und das Aufschieben zweier gleicher Bodenteile 2 = 2a, 2b ermöglicht.

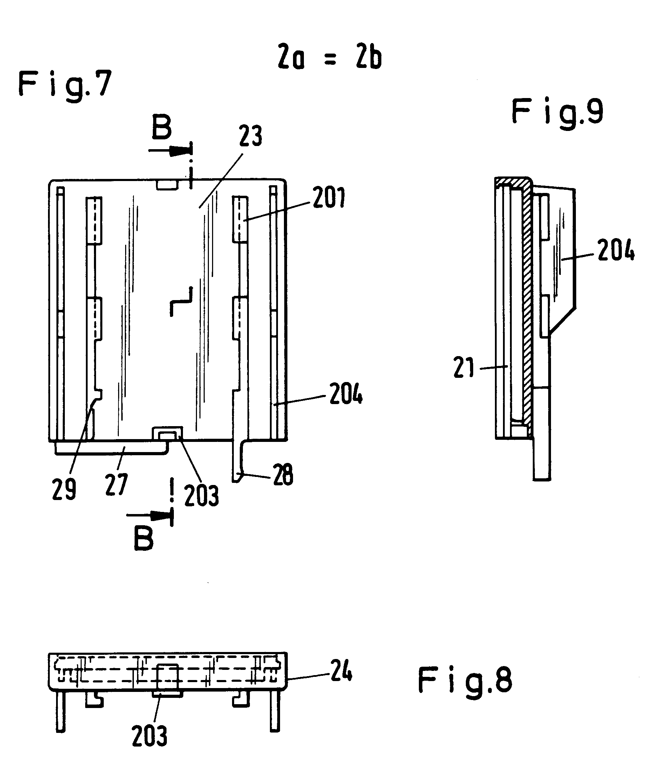

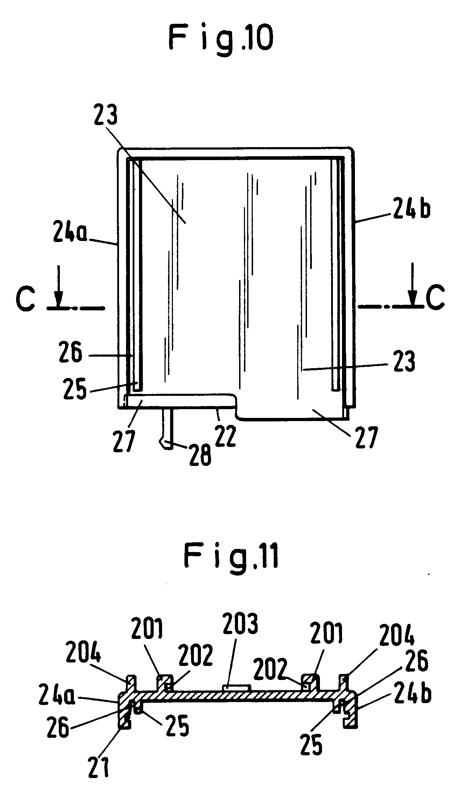

Das in den Figuren 7-11 dargestellte Bodenteil schafft die Voraussetzung dafür, daß einerseits der für die Befestigung des Gerätegehäuses 1,2 benötigte Befestigungsadapter 3-6 leicht am Gerätegehäuse 1,2 angebracht werden kann, und andererseits ein einfaches Öffnen des Gerätegehäuse 1,2 gewährleistet ist. Korrespondierend mit den Gleitschienen 11 am Gehäusekörper 1 ist das schalenartig geformte Bodenteil 2 auf der Innenseite zweier sich gegenüberliegender Seitenwände 24a,24b mit je einer Gleitnut 21 versehen. Parallel zu jeder Seitenwand 24 auf einer dazwischen liegenden Bodenwand 23 ist eine Leitschiene 25 angeordnet, die für eine gute Seitenstabilität der in einer Laufnut 26 gleitenden Seitenwände des Gehäusekörpers 1 sorgt, so daß die Seitenwände nicht nach innen gedrückt werden können. Durch das Ineinandergreifen von Nuten und Schienen ergibt sich eine mäanderförmige Verschlußkante zwischen Gehäusekörper 1 und Bodenteil 2, die für eine gute Abdichtung gegenüber eindringendem Staub sorgt.

Im Bereich ihrer Stoßkante 22 mit der die beiden Bodenteile 2 beim Aufschieben auf den Gehäusekörper 1 aufeinandertreffen, besitzen sie zwei bis zur Mitte des Bodenteils 2 reichende, versetzt zueinander angeordnete Überlappungszungen 27, die beim Aufeinandertreffen sich gegenseitig überlappen und gemeinsam eine der übrigen Bodenwand 23 entsprechende Wandstärke erreichen. Weiterhin sind im Bereich der Stoßkante 22 je ein Rasthaken 28 und eine zu dessen Verankerung dienende Rastauflage 29 vorgesehen, die beim Zusammenfügen der beiden Bodenteile 2 ineinandergreifen und diese zusammenhalten.

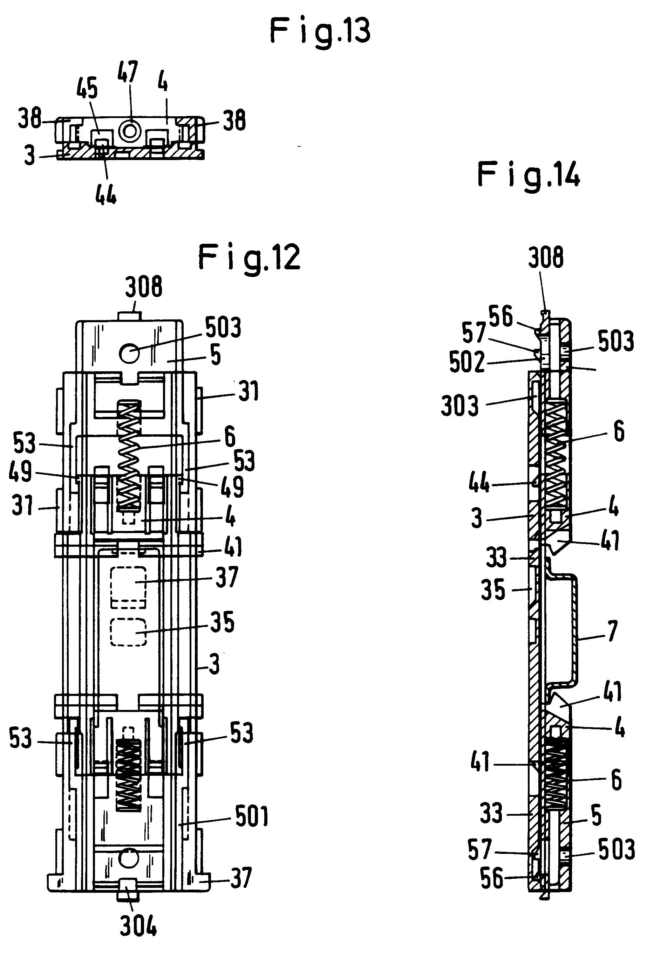

Zum Aufsetzen des in den Figuren 13-14 dargestellten Befestigungsadapters 3-6 auf die zusammengefügten Bodenteile 2, sind auf deren äußerer, von dem Gehäusekörper 1 abgewandten Seite beidseitig Haltezapfen 201 angeordnet, die zur Ausbildung von sich gegenüberliegenden Haltenuten 202 dienen, in die Gleitnocken 31 des Befestigungsadapters 3-6 passen. Die Gleitnocken 31 sind an einer Grundplatte 32 eines Schienenhalters 3, ebenso wie die Haltezapfen 201, im Abstand zueinander angeordnet, so daß sie in den verbliebenen Lücken des jeweils anderen Teiles 2,3 Platz finden. Beim Verbinden des Befestigungsadapters 3-6 mit den Bodenteilen 2 wird dieser zu-nächst senkrecht auf die Bodenteile 2 aufgesetzt, wobei Haltenocken 2o3 und Gleitnocken 31 in die jeweiligen Lücken eindringen und dann parallel zur Ebene der Bodenteile 2 zueinander so verschoben werden, daß die Gleitnocken 31 in die zugehörigen Haltenuten 202 gleiten.

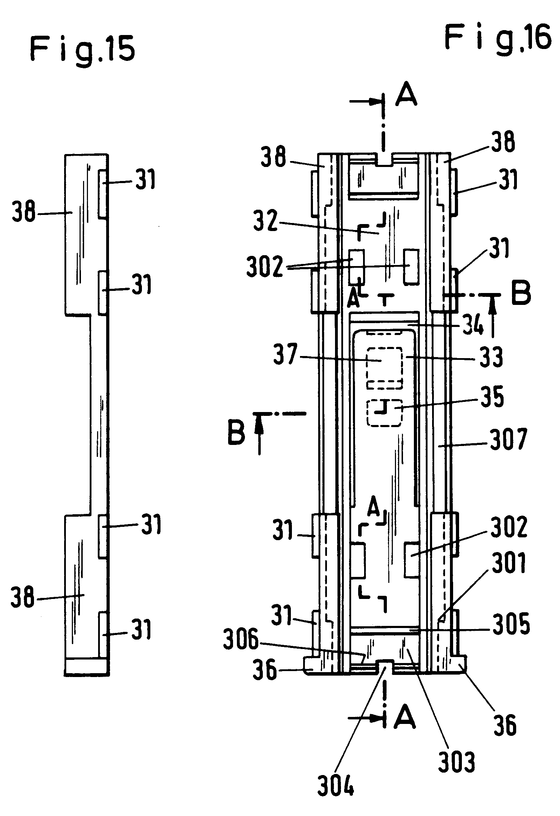

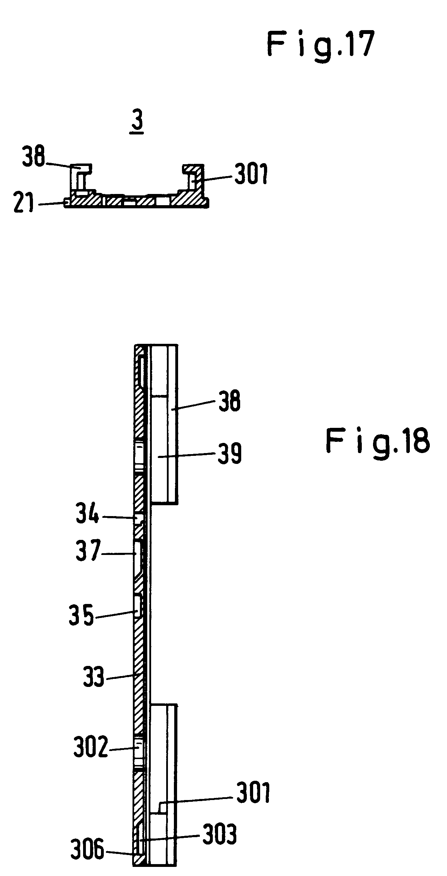

In der Grundplatte 32 des in den Figuren 15-18 dargestellten Schienenhalters 3 ist eine Aussparung 34 vorgesehen, in der eine Federlasche 33 liegt. Beim Einsetzen des Befestigungsadapters 3-6 verrastet die Federlasche 33 mit ihrer Vertiefung 35 an Haltenocken 203, von denen jeweils einer an der Stoßkante 22 des Bodenteils 2 angeformt ist. Da die Vertiefung 35 die Haltenocken 2o3 beider Bodenteile 2 erfaßt, wird deren Zusammenhalt zusätzlich gesichert. Das Einrasten der Haltenocken 203 wird dadurch erleichtert, daß der Vertiefung 35 eine Gleitmulde 37 vorgelagert ist, in der die Haltenocken 2o3 beim Aufsetzen des Befestigungsadapters 3-6 zunächst Platz finden, und aus dem sie durch Anheben der Federlasche 33 zur Vertiefung 35 gleiten. Die eingerastete Federlasche 33 kann auch durch Anheben mit einem Werkzeug zum Lösen des Schienenhalters 3 entrastet werden.

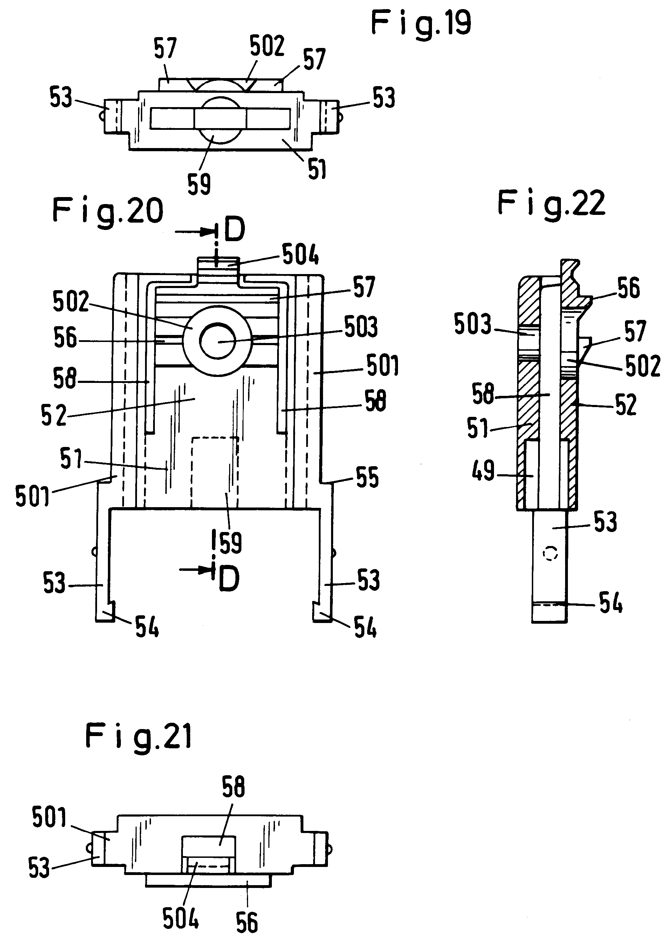

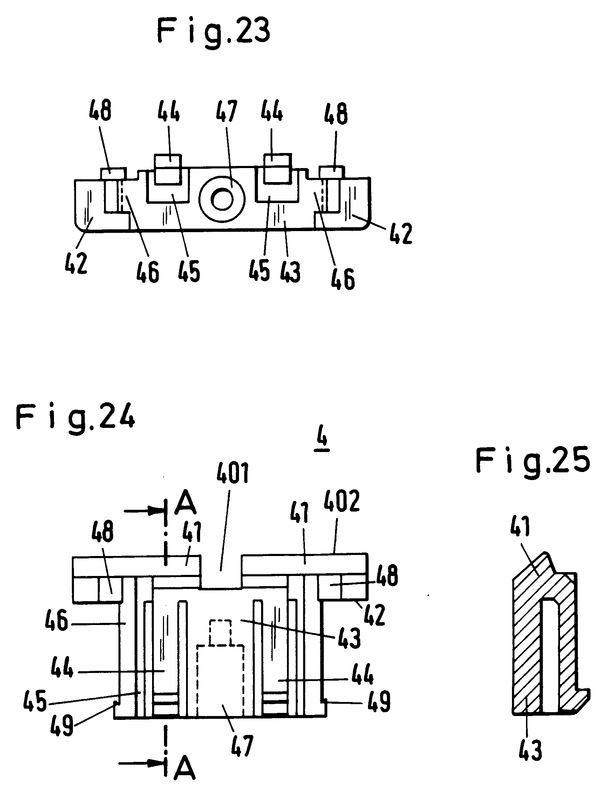

Der auf diese Weise bequem austauschbare Befestigungsadapter 3-6 besitzt bei seiner vorliegenden Ausbildung zur Profilschienenbefestigung außer dem Schienenhalter 3 noch jeweils zwei sich gegenüberliegend angeordnete in den Figuren 19-22 dargestellte Arretierteile 5 und in den Figuren 23-25 dargestellte Klemmteile 4, sowie eine zwischen den beiden Teilen 4, 5 angeordnete Feder 6.

Zur Befestigung der beiden Teile 4, 5 am Schienenhalter 3 sind an diesem, auf seiner äußeren, vom Gehäusekörper 1 abgewandten Seite, beidseitig sich gegenüberliegend im Bereich der beiden Enden des Schienenhalters 3, zwei Führungsleisten 38 angeformt, in denen Führungssschienen 39 ausgespart sind, die ihrerseits erste Führungsschienen 46 des Klemmteils 4 und zweite Führungsschienen 501 des Arretierteils 5 aufnehmen.

Das in den Figuren 23-25 dargestellte Klemmteil 4 besitzt einen Klemmkörper 43, an dem beidseitig die ersten Führungsschienen 46 ausgebildet sind, und dem in Klemmrichtung ein Keilbalken 41 vorgelagert ist, der mit seiner Klemmkante 402 an der Profilschiene 7 angreift. Der beidseitig über den Klemmkörper 43 hinausragende Keilbalken 41 wirkt mit rückseitigen Balkenschultern 42 als Anschlag an den Führungsleisten 38, wodurch der Öffnungsabstand zwischen den beiden Klemmteilen 4 begrenzt wird. Ein die Verschlußstellung der beiden Klemmteile 4 definierender Verschlußabstand wird durch einen weiteren Anschlag begrenzt, den zwei Gleithaken 44 bewirken, die innerhalb eines im Klemmkörper 43 ausgesparten Hakenfensters 45 liegen. Diese Gleithaken 44 greifen in Rastlöcher 302 des Schienenhalters 3 ein, deren Länge den maximalen Gleitweg des Klemmteils 4 in Klemmrichtung bestimmt. Zwei am Keilbalken 41 angeformte Führungszapfen 48 passen in Zapfennuten 307 des Schienenhalters 3 und dienen zur Führungsstabilisierung.

Das in den Figuren 19-22 dargestellte Arretierteil 5 ist mit dem Klemmteil 4 durch zwei beidseitig an einem Gleitkörper 51 angeformte Greifarme 53 gleitbeweglich verbunden. An dem freien Ende jedes Greifarms 53 befindet sich ein Greifhaken 54, der an seinem Greifansatz 49 des Klemmteils 4 Halt findet und dadurch den maximalen Abstand zwischen den beiden Teilen 4, 5 bestimmt. Das von der Mitte des Schienenhalters 3 aus entgegen der Klemmrichtung zwischen die Führungsleisten 38 eingesetzte Arretierteil 5 besitzt am anderen Ende jedes Greifarms 53 eine Greifarmschulter 55, mit der es an einen Nutenanschlag 301 anschlägt, so daß es nicht am Ende des Schienenhalters 3 aus den Gleitschienen 11 herausrutschen kann.

Im Gleitkörper 51 des Arretierteils 5 ist ein Laschenfenster 58 ausgespart, in dem eine Arretierlasche 52 mit einem ersten Rastzahn 56 und einem zweiten Rastzahn 57 liegt. Mit Hilfe der beiden Rastzähne 56, 57, die in eine zugehörige, in der Grundplatte 32 des Schienenhalters 3 ausgesparte Rastmulde 303 eingreifen und sich an einer Anschlagkante 306 abstützen, kann das Arretierteil 5 in Bezug zum Klemmteil 4 drei verschiedene Stellungen einnehmen.

In einer ersten, im unteren Teil der Figuren 12 und 14 dargestellten Stellung, ist das Arretierteil 5 so dicht an das Klemmteil 4 herangeführt, daß letzteres in seiner Klemmstellung arretiert ist. Hierbei hat sich der erste Rastzahn 56 an der Anschlagkante 306 verankert und die zwischen den beiden Teilen 4, 5 liegende, in einem Federloch 47 des Klemmteils 4 und in einem Federraum 59 des Arretierteils 5 angeordnete Feder 6 ist am stärksten komprimiert. Die Arretierung gewährleistet, daß sich die Klemmvorrichtung des Befestigungsadapters 3-6 selbst bei starken, z.B. von einen Anlage ausgehenden Vibrationen, nicht öffnen kann und somit das Gerätegehäuse 1, 2 sicher mit der Profilschiene 7 verbunden bleibt.

In einer zweiten, nicht dargestellten Stellung, hat sich der zweite Rastzahn 57 an der Anschlagkante 306 verankert. Dabei wird die Feder 6 nur teilweise komprimiert, so daß die Möglichkeit besteht, durch Ziehen am Gerätegehäuse 1,2 in Öffnungsrichtung eines ersten Klemmteils 4, gegen die Kraft der Feder 6 des zweiten Klemmteils 4 und durch eine Schwenkbewegung des Gerätegehäuses 1,2, dieses von der Profilschiene 7 abzunehmen. Bei einer unmittelbar an einer Wand befestigten Hutschiene gelingt dies jedoch nicht, weil für die erforderliche Schwenkbewegung des Gerätegehäuses 1,2 kein Platz ist.

Es ist deshalb eine dritte, im oberen Teil der Figuren 12 und 14 dargestellte Stellung des Arretierteils 5 vorgesehen. In dieser kann das Arretierteil 5 bis zum Anschlag an den Greifarmschultern 55 aus den Führungsleisten 38 herausgezogen werden, so daß die beiden Teile 4,5 ihren größten, durch den Anschlag der Greifhaken 54 definierten Abstand zueinander erreichen. Die Feder 6 sorgt dafür, daß die beiden Teile 4,5 auf Abstand gehalten werden und gemeinsam in die Öffnungsstellung gezogen werden können, so daß ohne Überwindung einer Federkraft das Gerätegehäuse 1,2 in dieser Öffnungsstellung senkrecht zur Wand von der Hutschiene abgenommen werden kann.

In der Öffnungsstellung überragen die beiden Arretierteile 5 das Gerätegehäuse 1,2 soweit, daß diese mit entsprechenden Löchern 502,503 versehen, die Möglichkeit einer Schraubbefestigung bieten. Das in der Arretierlasche 52 ausgesparte größere Kopfloch 502 ermöglicht den Durchtritt eines Schraubenkopfes, der oberhalb des kleineren Schraubloches 503 in dem Gleitkörper 51 aufliegt. Zum Lösen der Arretierlasche 52 aus einer ihrer Klemmstellungen kann diese mit einem geeigneten Werkzeug, z.B. einem Schraubendreher, angehoben werden, was durch eine Betätigungsöffnung 304 und einen Betätigungssteg 504 erleichtert ist. Zur Entnahme des Arretierteils 5 kann dieses in Klemmrichtung aus den Führungsleisten 38 gezogen werden, wobei die Rastzähne 56,57 über eine Gleitkante 305 aus der Rastmulde 303 herausgleiten.

Der gleiche Befestigungsadapter 3-6 ist in Verbindung mit Gehäusen verwendbar, deren Breite etwa der des Befestigungsadapters 3-6 entspricht, aber auch solchen, die wesentlich breiter sind. Damit breitere Gehäuse, die nur teilweise auf dem Befestigungsadapter 3-6 aufliegen, nicht durch seitlich wirkende Kräfte aus ihrer Verankerung gerissen werden, sind die zugehörigen Bodenteile 2 beidseitig mit Stützstegen 204 versehen, mit denen sie sich an der entsprechenden Wand- oder Bodenfläche abstützen können. Weiterhin ist der Schienenhalter 3 an seinem unteren Ende, eine Wandmontage des Gerätegehäuse 1, 2 vorausgesetzt, mit Haltefüßen 36 versehen, an denen sich das jeweilige Bodenteil 2 mit Haltezapfen 201 abstützen kann. Das Gewicht des Gerätegehäuses 1,2 muß somit nicht von der Federlasche 33 gehalten werden.

## Patentansprüche

1. Gehäuse für Geräte in elektrischen Anlagen, das zur Befestigung an einer Wand- oder Bodenfläche geeignet ist, mit einem im wesentlichen quaderförmigen Gehäusekörper (1) und einem am Gehäusekörper (1) befestigten Bodenteil (2), das auf seiner Außenseite mit Halteelementen (201) versehen ist, die das Aufsetzen eines austauschbaren Befestigungsadapters (3 - 6) ermöglichen, wobei der Befestigungsadapter (3 - 6) an die Art der vorgesehenen Wand- Bodenbefestigung angepaßt ist und am Gehäusekörper (1) einerseits und am Bodenteil (2) andererseits ineinandergreifende Gleitschienen (11) und Gleitnuten (21) vorgesehen sind,
**dadurch gekennzeichnet**,
daß das Bodenteil (2) aus zwei vorzugsweise identisch ausgebildeten Bodenhalbteilen (2a, 2b) besteht, die von zwei sich gegenüberliegenden Seiten auf den Gehäusekörper (1) aufgeschoben werden und in der Mitte des Bodenteils (2) mit Stoßkanten (22) aufeinandertreffen.

2. Gehäuse nach Anspruch 1, dadurch gekennzeichnet, daß das Bodenteil (2) die Form einer flachen Schale besitzt, die durch eine Bodenwand (23) und Seitenwände (24) gebildet ist und die nur bei einer Trennung in die beiden Bodenhalbteile (2a, 2b) an einer Seite zum Aufschieben geöffnet ist, und die ineinandergreifenden Gleitelemente (11, 21) einerseits auf der Innenseite der beiden in Gleitrichtung liegenden Seitenwände (24a, 24b) des Bodenteils (2) und andererseits auf den entsprechenden Außenseiten des Gehäusekörpers (1) vorgesehen sind und eine mäanderförmige Dichtung des Gehäuses bewirken.

3. Gehäuse nach Anspruch 2, dadurch gekennzeichnet, daß parallel zu den beiden in Gleitrichtung liegenden Seitenwänden (24a, 24b) Leitschienen (25) angeordnet sind, die für die Enden der beiden zugehörigen Gehäusewände (12) eine Laufnut (26) bilden.

4. Gehäuse nach einem der vorhergehenden Ansprüche, dadurch gekennzeichnet, daß im Bereich der Stoßkante (22) der beiden Bodenhalbteile (2a, 2b) eine Überlappung der zugehörigen Bodenwände (23) erfolgt, vorzugsweise derart, daß die beiden Bodenwände (23) im Bereich ihrer Stoßkante (22) jeweils eine Überlappungszunge (27) besitzen, die die halbe Breite und die halbe Wanddicke der Bodenwand (23) besitzen und stufig zueinander versetzt sind, so daß zwei aufeinandertreffende, in ihrer Wandstärke halbierte Überlappungszungen (27) sich zur Wandstärke der übrigen Bodenwand (23) überlappend ergänzen.

5. Gehäuse nach einem der vorhergehenden Ansprüche, dadurch gekennzeichnet, daß die beiden Bödenhalbteile (2a,2b) im Bereich ihrer Stoßkante (22) jeweils mit einem Rasthaken (28) und einer den Rasthaken (28) verankernden Rastauflage (29) versehen sind und diese eine selbsthaltende Verbindung der beiden Bodenhalbteile (2a, 2b) ermöglichen.

6. Gehäuse nach einem der vorhergehenden Ansprüche, dadurch gekennzeichnet, daß auf der Außenseite der Bodenhalbteile (2a, 2b) entlang ihrer Gleitrichtung Haltezapfen (201) angeformt sind, zwischen denen und der Bodenwand (23) Haltenuten (202) liegen, in denen Gleitnokken (31) Platz finden, die ihrerseits an einem zum Befestigungsadapter (3 - 6) gehörigen Schienenhalter (3) angeformt sind.

7. Gehäuse nach Anspruch 6, dadurch gekennzeichnet, daß die Haltezapfen (201) und die Gleitnocken (31) jeweils in einem solchen Abstand zueinander angeordnet sind, daß bei einem sich senkrecht zur Ebene der Bodenwand (23) vollziehenden Fügevorgang die Gleitnocken (31) zwischen den Haltezapfen (201) Platz finden und durch eine parallel zur Ebene der Bodenwand (23) ausgeführte Verschiebung in den Haltenuten (202) bis zu einem Anschlag bei gleichzeitiger Verriegelung, eine Befestigung des Schienenhalters (3) am Bodenteil (2) erfolgt.

8. Gehäuse nach einem der Ansprüche 6 und 7, dadurch gekennzeichnet, daß zur Arretierung der Grundstellung des am Bodenteil (2) befestigten Schienenhalters (3) eine Federlasche (33) dient, die in einer Grundplatte (32) des Schienenhalters (3) durch eine Aussparung (34) freigelegt ist und die eine Vertiefung (35) besitzt, in die je ein im Bereich der Stoßkante (22) an dem jeweiligen Bodenhalbteil (2a, 2b) angeformter, über die Ebene der Bodenwand (23) hinausragender Haltenocken (203) eintaucht und daß die Vertiefung (35) durch das Erfassen der beiden Haltenocken (203) auch die zugehörigen Bodenhalbteile (2a, 2b) zusammenhält.

9. Gehäuse nach einem der Ansprüche 6-8, dadurch gekennzeichnet, daß auf der vom Gehäuse abgewandten äußeren Seite der Grundplatte (32) des Schienenhalters (3), an seinen beiden Enden je zwei in Gleitrichtung liegende Führungsleisten (38) angeordnet sind, die zur Innenseite hin abgewinkelt sind und mit der Grundplatte (32) zwei sich gegenüberliegende Führungsnuten (39) bilden, die ihrerseits zur Aufnahme einer an einem Klemmteil (4) angeordneten ersten Führungsschiene (46) und einer an einem Arretierteil (5) angeordneten zweiten Führungsschiene (501) dienen.

10. Gehäuse nach einem der vorhergehenden Ansprüche, dadurch gekennzeichnet, daß das Klemmteil (4) zur lösbaren Befestigung des Gehäuses an einer Profilschiene (7) dient, derart, daß zwei Klemmteile (4) die Profilschiene (7) beidseitig zangenartig erfassen, wobei sie durch Federkraft in ihrer Klemmstellung gehalten werden und zum Lösen entgegen der Wirkung dieser Federkraft in eine Öffnungsstellung verschiebbar sind und daß das Arretierteil (5) und das Klemmteil (4) zueinander und gegenüber dem Schienenhalter (3) verschiebbar sind und beide Teile (4, 5) so miteinander gekoppelt sind, daß sie mindestens zwei, den gegenseitigen Abstand definierende Stellungen einnehmen können und in einer dieser Stellungen das Klemmteil (4) durch das Arretierteil so blockiert ist, daß sich dieses nicht in die Öffnungsstellung zum Lösen von der Profilschiene (7) verschieben läßt.

11. Gehäuse nach einem der vorhergehenden Ansprüche, dadurch gekennzeichnet, daß zur Kopplung des Klemmteils (4) mit dem Arretierteil (5) mindestens ein Greifarm (53) des einen Teils an einem Greifansatz (49) des anderen Teils so angreift, daß hierdurch der maximale Abstand zwischen den beiden Teilen (4, 5) definiert ist, und dieser Abstand nur durch Verschieben der beiden Teile (4, 5) aufeinander zu, entgegen der Federkraft einer sie auseinanderdrückenden Feder, vorzugsweise einer zwischen den beiden Teilen (4, 5) angeordneten Schraubenfeder, verringert werden kann.

12. Gehäuse nach einem der vorhergehenden Ansprüche, dadurch gekennzeichnet, daß die verschiedenen Stellungen der beiden Teile (4, 5) zueinander durch verschiedene Anschläge (56, 57, 306) bestimmt werden, die zur Stellungsänderung gegebenenfalls durch federnde Rastmittel (52) gebildet sind, und daß in einer ersten, das Klemmteil (4) blockierenden Stellung das Arretierteil (5) so dicht an das Klemmteil (4) herangeführt ist, daß es dessen Verschiebung in die Öffnungsstellung blokkiert.

13. Gehäuse nach einem der vorhergehenden Ansprüche, dadurch gekennzeichnet, daß in einer zweiten Stellung der Abstand zwischen den beiden Teilen (4, 5) so festgelegt ist, daß das Klemmteil (4) gegen die Kraft der die beiden Teile (4, 5) auseinanderdrückenden Feder (6) in die Öffnungsstellung verschiebbar ist.

14. Gehäuse nach einem der vorhergehenden Ansprüche, dadurch gekennzeichnet, daß in einer dritten Stellung der Abstand zwischen den beiden Teilen (4, 5) dem durch mindestens einen Greifarm (53) bestimmten maximalen Abstand zwischen den beiden Teilen (4, 5) entspricht und in dieser Stellung durch gemeinsames Verschieben der beiden Teile (4, 5) das Klemmteil (4) ohne Überwindung einer Federkraft in die Öffnungsstellung verschiebbar ist.

15. Gehäuse nach einem der vorhergehenden Ansprüche, dadurch gekennzeichnet, daß das Klemmteil (4) einen, ggf. durch eine Ausnehmung (401) unterbrochenen Keilbalken (41) besitzt, der durch seine vorzugsweise prismatische Form eine die Profilschiene (7) erfassende Klemmkante (402) bildet und einen ebenfalls zum Klemmteil (4) gehörigen, zwischen den Führungsleisten (38) liegenden Klemmkörper (43) beidseitig überragt und mit auf seiner Rückseite liegenden Balkenschultern (42) einen Anschlag bildet, der in der Öffnungsstellung am zugeordneten Ende der Führungsleisten (38) anliegt.

16. Gehäuse nach einem der vorhergehenden Ansprüche, dadurch gekennzeichnet, daß das Klemmteil (4) erste Führungsschienen (46) besitzt, die eine Gleitbewegung zwischen den Führungsleisten (38) in den Führungsnuten (39) ermöglichen und daß diese Gleitbewegung durch einen Anschlag begrenzt ist, den mindestens ein Gleithaken (44) bildet, der beim Einschieben des Klemmteils (4) in die Führungsnuten (39) in ein Rastloch (302) der Grundplatte (32) des Schienenhalters (3) eingreift und in Klemmrichtung ein unerwünschtes Herausgleiten aus den Führungsnuten (39) verhindert.

17. Gehäuse nach einem der vorhergehenden Ansprüche, dadurch gekennzeichnet, daß im Klemmkörper (43) des Klemmteils (4) zur Freistellung der Gleithaken (44) Hakenfenster (45) ausgespart sind und zur Aufnahme eines Endes der zwischen dem Klemmteil (4) und dem Arretierteil (5) angeordneten Feder (6) ein Federloch (47) vorgesehen ist.

18. Gehäuse nach einem der vorhergehenden Ansprüche, dadurch gekennzeichnet, daß am Klemmkörper (43), vorzugsweise im Bereich der ersten Führungsschienen (46) je ein Greifansatz (49) ausgebildet ist, an dem ein Greifarm (53) des Arretierteils (5) angreifen kann.

19. Gehäuse nach einem der vorhergehenden Ansprüche, dadurch gekennzeichnet, daß das Arretierteil (5) entsprechend dem Klemmteil (4) mit zweiten Führungsschienen (501) in den Führungsnuten (39) gleitbeweglich angeordnet ist und die zur Kopplung mit dem Klemmteil (4) dienenden Greifarme (53) an ihrem dem Klemmteil (4) zugewandten Ende mit Greifhaken (54) und an ihrem am Gleitkörper (51) befestigten Ende mit Greifarmschultern (55) versehen sind und daß letztere zusammen mit einem in jeder Führungsnut (39) ausgebildeten Nutanschlag (301) in Öffnungsrichtung ein Herausgleiten des Arretierteils (5) aus der Führungsnut (39) verhindern.

20. Gehäuse nach einem der vorhergehenden Ansprüche, dadurch gekennzeichnet, daß das Arretierteil (5) eine in einem Laschenfenster (58) schwingbeweglich angeordnete federnde Arretierlasche (52) besitzt, die mindestens mit einem Rastzahn (56, 57) versehen ist, der in eine Rastmulde (303) eingreift und an einer Anschlagkante (306) anschlägt und daß am freien Ende der Arretierlasche (52) ein Betätigungssteg (504) vorgesehen ist, der einen Zugriff solcher Art erlaubt, daß die Arretierlasche (52) entgegen ihrer Federkraft aus ihrer Anschlagstellung befreit wird und damit eine erneute Verschiebung des Arretierteils (5) ermöglicht.

21. Gehäuse nach einem der vorhergehenden Ansprüche, dadurch gekennzeichnet, daß das Arretierteil (5) in der dritten Stellung der beiden Teile (4, 5) mit seinem freien Ende über das Ende des Schienenhalters (3) und damit auch über die Grundfläche des Gehäusekörpers (1) hinausragt und in dieser Stellung die Möglichkeit bietet den Gehäusekörper (1) vorzugsweise mit Hilfe entspechender Löcher (502, 503), an einer Wand- oder Bodenfläche ohne Profilschiene zu befestigen, und daß an der dem Klemmteil (4) zugewandten Seite des Gleitkörpers (51) ein Federraum (59) zur Aufnahme des anderen Endes der Feder (6) dient.

## Claims

1. Cabinet for devices in electrical systems, which cabinet is suitable for wall or floor mounting, comprising a substantially square casing body (1) and a floor part (2) which is mounted on the cabinet body (1), which floor part is provided on its exterior with retaining elements (201) which render possible the mounting of an exchangeable securing adaptor (3 - 6), in which connection the securing adaptor (3 -6) is suitable for the type of wall/floor mounting which is provided, and sliding rails (11) and sliding grooves (21) which engage in one another are provided on the cabinet body (1) on the one hand and on the floor part (2) on the other hand, characterised in that the floor part (2) consists of two floor halves (2a, 2b) which are preferably formed so as to be identical and which are pushed onto the cabinet body (1) from two opposite sides and which contact one another in the centre of the floor part (2) with abutting edges (22).

2. Cabinet according to Claim 1, characterised in that the floor part (2) has the shape of a flat saucer, which is formed by one floor wall (23) and side walls (24) and which is opened on one side only by means of a separation in the two floor halves (2a, 2b) to be pushed on, and the sliding elements (11, 21) which engage in one another are provided on the one hand on the inner side of the two side walls (24a, 24b) of the floor part (2) which are located in the sliding direction, and, on the other hand, on the corresponding outsides of the cabinet body (1), and effect a meander-shaped sealing of the cabinet.

3. Cabinet according to Claim 2, characterised in that there are disposed, parallel to the two side walls (24a, 24b) guide rails which are located in the sliding direction, sliding rails (25) which form a running groove (26) for the ends of the two associated casing walls (12).

4. Cabinet according to any one of the preceding claims, characterised in that in the vicinity of the striking edge (22) there is an overlapping of the two floor halves (2a, 2b) of the associated floor walls (23), preferably in such a manner that the two floor walls (23) each have an overlapping tongue (27) in the vicinity of their abutting edges (22), which overlapping tongues have half the width and half the wall thickness of the floor wall (23) and are offset to one another in a stepped manner, such that two overlapping tongues (27), the wall strength of which is halved and which contact one another, produce, in an overlapping manner, the wall strength of the remaining wall (23).

5. Cabinet according to any one of the preceding claims, characterised in that the two floor halves (2a, 2b) are provided, in the vicinity of their abutting edge (22) with, in each case, an engaging hook (28) and an engaging stop (29) which anchors the engaging hook (28), and an engaging support (29) which secures the engaging hook (28), and these render a self-retaining connection of the two floor halves (2a, 2b) possible.

6. Cabinet according to any one of the preceding claims, characterised in that on the external side of the floor halves (2a, 2b) there are formed, along the sliding direction thereof, retaining pins (201), there being located, between these pins and the floor wall (23), retaining grooves (202) in which there are accommodated sliding cams (31), which, for their part, are formed on a rail holder (3) which belongs to the securing adapter (3 - 6).

7. Cabinet according to Claim 6, characterised in that the retaining pins (201) and the sliding cams (31) are, in each case, disposed at such a distance from one another that during a joining process which is completed parallel to the plane of the floor wall (23) the sliding cams (21) are located between the retaining pins (201) and a securing of the rail holder (3) on the floor part (2) is performed by means of a displacement into the retaining grooves (202) until abutment and simultaneous locking, which displacement is performed parallel to the plane of the floor wall (23).

8. Cabinet according to either one of Claims 6 and 7, characterised in that a spring shackle (33) acts to stop the basic setting of the rail holder (3) which is secured to the floor part (2), which spring shackle which is made accessible in a base plate (32) of the rail holder (3) by means of a cutout (34) and which comprises a recess (35), into which there extends, in each case, a retaining cam (203) which is formed in the vicinity of the striking edge (22) on the floor half (2a, 2b) in each case and which projects beyond the plane of the floor wall (23); and in that the recess (35) also holds the associated floor halves (2a, 2b) together by gripping the two retaining cams (203).

9. Cabinet according to any one of Claims 6 to 8, characterised in that on the outer side of the base plate (32) of the rail holder (3) which is turned away from the cabinet, there are disposed, at both the ends thereof, two guide bars (38) in each case, which guide bars are disposed in the sliding direction and which are angled towards the inner side and which, together with the base plate (32), form two guide grooves (39) located opposite one another which, for their part, act to accommodate a first guide rail (46) disposed on a clamping part (4) and a second guide rail (501) disposed on a stop part (5).

10. Cabinet according to any one of the preceding claims, characterised in that the clamping part (4) acts for the detachable securing of the cabinet on a profiled rail (7) in such a manner that two clamping parts (4) grip the profiled rail (7) on both sides in the manner of tongues, wherein they are retained in their clamping position by means of resilient force and, in order to be released, are displaced against the effect of this resilient force into an open position, and in that the stop part (5) and the clamping part (4) are displaceable towards one another and in relation to the rail holder (3) and both parts (4, 5) are coupled with one another in such a manner that they can assume at least two positions defining the relative distance and, in one of these positions, the clamping part (4) is blocked by the stop part in such a manner that it can no longer be displaced into the opening position to release the profiled rail (7).

11. Cabinet according to any one of the preceding claims, characterised in that to couple the clamping part (4) to the stop part (5) at least one gripping arm (53) of the one part clamps a gripping projection (49) of the other part in such a manner that, as a result hereof, the maximum distance between the two parts (4, 5) is defined, and this distance can only be reduced by displacing the two parts (4, 5) towards one another against the resilient force of a spring which presses them apart, preferably a coil spring which is disposed between the two parts (4, 5).

12. Cabinet according to any one of the preceding claims, characterised in that the different positions of the two parts (4, 5) in relation to one another are determined by different abutments (56, 57, 306) which are optionally formed by resilient engaging means (52) for altering the position; and in that in a first position, which blocks the clamping part (4), the stop part (5) is pushed so tightly against the clamping part (4) that it blocks the displacement thereof into the open position.

13. Cabinet according to any one of the preceding claims, characterised in that in a second position the distance between the two parts (4, 5) is established such that the clamping part (4) may be displaced into the open position against the force of the springs (6) which press the two parts (4, 5) apart.

14. Cabinet according to any one of the preceding claims, characterised in that, in a third position, the distance between the two parts (4, 5) corresponds to the maximum distance between the two parts (4, 5) which is determined by a gripping arm (53) and in this position, the clamping part (4) may be displaced into the open position by a common displacement of the two parts (4, 5) without overcoming a resilient force.

15. Cabinet according to any one of the preceding claims, characterised in that the clamping part (4) comprises a tapered bar (41) which is optionally interrupted by a recess (401) and which, as a result of its preferably prismatic shape, forms a clamping edge (402) which produces the profiled rail (7) and projects, on both sides, beyond a clamping body (43) which likewise belongs to the clamping part (4) and is located between the guide bars (38) and forms, together with shoulders (42) located at its rear side, an abutment which, in the open position, abuts on the associated end of the guide bars (38).

16. Cabinet according to any one of the preceding claims, characterised in that the clamping part (4) comprises first guide rails (46), which render possible a sliding movement between the guide bars (38) in the guide grooves (39); and in that this sliding movement is delimited by an abutment which forms at least one sliding hook (44) which, when the clamping part (4) is pushed into the guide grooves (39) engages in an engaging aperture (302) of the base plate (32) of the rail holder (3) and prevents an undesired sliding out from the guide grooves (39) in the clamping direction.

17. Cabinet according to any one of the preceding claims, characterised in that in the clamping body (43) of the clamping part (4), hook windows (45) for making the sliding hooks (44) available are cut out, and a spring aperture (47) is provided to accommodate one end of the spring (6) which is disposed between the clamping part (4) and the stop part (5).

18. Cabinet according to any one of the preceding claims, characterised in that on the clamping body (43) and preferably in the vicinity of the first guide rails (46) there is formed, in each case, a gripping projection (49), on which one gripping arm (53) of the stop part (5) may engage.

19. Cabinet according to any one of the preceding claims, characterised in that the stop part (5) corresponding to the clamping part (4) is disposed with second guide rails (501) in a slidably moveable manner in the guide grooves (39) and the gripping arms (53) which serve for the coupling with the clamping part (4) are provided on the end thereof which faces the clamping part (4) with gripping hooks (54) and on the end thereof which is secured to the clamping body (51) with clamping arm shoulders (55); and in that the latter, together with a groove abutment (301) which is formed in each guide groove (39), prevent a sliding out of the stop part (5) from the guide groove (39) in the direction of opening.

20. Cabinet according to any one of the preceding claims, characterised in that the stop part (5) comprises a resilient stop flap (52) which is disposed in a pivotable manner in a flap window (58), and which is provided with at least one engaging tooth (56, 57) which engages in an engaging depression (303) and abuts an abutment edge (306); and in that an actuation strut (504) is provided at the free end of the stop flap (52) which provides access of such a type that the stop flap (52) is released from its abutment position against the resilient force thereof and thus renders possible a renewed displacement of the stop part (5).

21. Cabinet according to any one of the preceding claims, characterised in that the stop part (5) projects in the third setting of the two parts (4, 5) with its free end beyond the end of the rail holder (3) and also over the basic surface of the cabinet body (1) and, in this position, offers the possibility of securing the cabinet (1), advantageously using suitable apertures (502, 503), to a wall or floor surface without a profiled rail; and in that on the side of the sliding member (51) which is turned towards the clamping part (4), a spring chamber (59) acts to accommodate the other end of the spring (6).

## Revendications

1. Boîtier pour des appareils situés dans des installations électriques, qui convient pour la fixation sur une surface murale ou une surface de sol, comportant un corps de boîtier essentiellement parallélépipédique (1) et une partie de fond (2) fixée au corps de boîtier (1) et qui comporte, sur sa face extérieure, des éléments de retenue (201) qui permettent la mise en place d'un adaptateur interchangeable de fixation (3 à 6), l'adaptateur de fixation (3 à 6) étant adapté au type de la fixation murale ou de sol prévue, tandis que des rails de glissement (11) et des glissières (21), qui engrènent réciproquement, sont prévus sur le corps de fond (1) d'une part et sur la partie de fond (2) d'autre part, caractérisé en ce que la partie de fond (2) est constituée de deux moitiés de fond (2a,2b) ayant des formes de préférence identiques et qui sont emmanchées sur le corps de boîtier (1) à partir de deux côtés opposés et se rencontrent, au moyen de bords d'aboutement (22), au milieu de la partie de fond (2).

2. Boîtier selon la revendication 1, caractérisé en ce que la partie de fond (2) possède la forme d'une coque plate, qui est formée par une paroi de fond (23) et des parois latérales (24) et qui est ouverte d'un côté pour l'emmanchement, uniquement dans le cas d'une séparation en les deux parties de fond (2a,2b), et que les éléments de glissement (11,21), qui engrènent l'un dans l'autre, sont prévus d'une part sur la face intérieure des deux parois latérales (24a,24b) de la partie de fond (2), qui s'étendent dans la direction de glisse ment, et d'autre part sur les faces extérieures correspondantes du corps de boîtier (1), et réalisent une étanchéité du boîtier, avec une configuration sinueuse.

3. Boîtier selon la revendication 2, caractérisé en ce que parallèlement aux deux parois latérales (24a, 24b) situées dans la direction de glissement sont disposés des rails de guidage (25), qui forment une rainure de circulation (26) pour les extrémités des deux parois associées (12) du boîtier.

4. Boîtier selon l'une des revendications précédentes, caractérisé en ce qu'un chevauchement des parois de fond associées (23) est réalisé dans la zone des bords d'aboutement (22) des deux moitiés de fond (2a,2b), de préférence de telle sorte que les deux parois de fond (23) possèdent, dans la zone de leurs bords d'aboutement (22), chacune une languette de chevauchement (27), qui possède la moitié de la largeur et la moitié de l'épaisseur de la paroi de fond (23), ces languettes étant décalées en étant échelonnées l'une par rapport à l'autre de sorte que deux languettes de chevauchement (27), qui se rencontrent et ont une épaisseur de paroi divisée de moitié, se complètent par chevauchement pour fournir l'épaisseur de paroi du reste de la paroi de fond (23).

5. Boîtier selon l'une des revendications précédentes, caractérisé en ce que les deux moitiés de fond (2a,2b) sont équipées respectivement, dans la zone de leur bord d'aboutement (22), d'un crochet d'encliquetage (28) et d'un appui d'encliquetage (29) qui sert à l'ancrage du crochet d'encliquetage (28), et que ces éléments permettent une liaison autobloquante des deux moitiés de fond (2a,2b).

6. Boîtier selon l'une des revendications précédentes, caractérisé en ce que sur la face extérieure des moitiés de fond (2a,2b) et dans leur direction de glissement sont formés par moulage des ergots de retenue (201), et qu'entre ces ergots de retenue et la paroi de fond (23) sont présentes des rainures de retenue (202), dans lesquelles sont présentes des parties saillantes de glissement (31), qui pour leur part sont formées par moulage sur un support de rail (3) qui fait partie de l'adaptateur de fixation (3 à 6).

7. Boîtier selon la revendication 6, caractérisé en ce que les ergots de retenue (201) et les parties saillantes de glissement (31) sont disposés respectivement à une distance réciproque telle que, lors d'une opération de jonction exécutée perpendiculairement au plan de la paroi de fond (23), les parties saillantes de glissement (31) passent entre les ergots de retenue (201) et qu'une fixation du support de rail (3) sur la partie de fond (2) est réalisée au moyen d'un déplacement, exécuté parallèlement au plan de la paroi de fond (23), dans les rainures de retenue (202) jusqu'à une butée lors du verrouillage simultané.

8. Boîtier selon l'une des revendications 6 et 7, caractérisé en ce que pour le blocage du support de rail (3), fixé sur la partie de fond (2), dans sa position de base, on utilise une patte élastique (33), qui s'étend librement dans un évidement (34) aménagé dans une plaque de base (32) du support de rail (3) et qui possède un renfoncement (35) dans lequel pénètre respectivement une partie saillante de retenue (203) qui est formée par moulage, dans la zone du bord d'aboutement (22), sur la moitié de fond respective (2a,2b) et fait saillie au-delà du plan de la paroi de base (23), et que le renfoncement (35) maintient également assemblées les moitiés de fond associées (2a,2b), en saisissant les deux parties saillantes de retenue (203).

9. Boîtier selon l'une des revendications 6 à 8, caractérisé en ce que sur la face extérieure, tournée à l'opposé du boîtier, de la plaque de base (32) du support de rail (3) sont disposées respectivement, sur les deux extrémités de ce support, deux réglettes de guidage (38), qui s'étendent dans la direction de glissement et qui sont coudées en direction de la face intérieure et forment, avec la plaque de base (32), deux rainures de guidage opposées (39), qui pour leur part servent à loger un premier rail de guidage (46), disposé sur un élément de serrage (4), et un second rail de guidage (501) disposé sur un élément d'arrêt (5).

10. Boîtier selon l'une des revendications précédentes, caractérisé en ce que l'élément de serrage (4) est utilisé pour la fixation amovible du boîtier sur un rail profilé (7) de telle sorte que deux éléments de serrage (4) saisissent des deux côtés, à la manière d'une pince, le rail profilé (7), en étant retenus par la force d'un ressort dans leur position de serrage et en étant déplaçables pour venir dans une position ouverte, pour le desserrage, à l'encontre de l'action de la force de ce ressort, que l'élément d'arrêt (5) et l'élément de serrage (4) peuvent être déplacés l'un par rapport à l'autre et par rapport au dispositif de retenue de rail (3), que ces deux éléments (4,5) sont accouplés entre eux de telle sorte qu'ils peuvent prendre au moins deux positions, qui définissent la distance réciproque, et que, dans l'une de ces positions, l'élément de serrage (4) est bloqué par l'élément de blocage de sorte que ce dernier ne peut pas venir dans la position d'ouverture pour son dégagement du rail profilé (7).

11. Boîtier selon l'une des revendications précédentes, caractérisé en ce que pour l'accouplement de l'élément de serrage (4) à l'élément d'arrêt (5), au moins un bras de saisie (53) d'un élément attaque un appendice saillant de saisie (49) de l'autre élément de sorte que la distance maximale entre les deux éléments (4, 5) est de ce fait définie, et que cette distance ne peut être réduite que moyennant un déplacement des deux éléments (4,5) l'un par rapport à l'autre à l'encontre de la force d'un ressort qui les écarte, de préférence un ressort hélicoïdal disposé entre les deux éléments (4,5).

12. Boîtier selon l'une des revendications précédentes, caractérisé en ce que les différentes positions réciproques des deux éléments (4,5) sont déterminées par différentes butées (56,57,306), qui sont éventuellement formées, pour modifier la position, par des moyens élastiques d'encliquetage (52), et que lorsqu'il est dans une première position réalisant le blocage de l'élément de serrage (4), l'élément d'arrêt (5) est suffisamment rapproché contre l'élément de serrage (4) pour bloquer le déplacement de cet élément de serrage dans la position d'ouverture.

13. Boîtier selon l'une des revendications précédentes, caractérisé en ce que dans une seconde position, la distance entre les deux éléments (4,5) est fixée de telle sorte que l'élément de serrage (4) peut être amené dans la position ouverte, à l'encontre de la force du ressort (6) qui repousse les deux éléments (4,5) en les écartant.

14. Boîtier selon l'une des revendications précédentes, caractérisé en ce que dans une troisième position, la distance entre les deux éléments (4,5) correspond à la distance maximale entre les deux éléments (4,5), déterminée par au moins un bras de saisie (53), et, dans cette position, l'élément de serrage (4) peut être amené dans la position ouverte, sans vaincre la force d'un ressort, par déplacement conjoint des deux éléments (4,5).

15. Boîtier selon l'une des revendications précédentes, caractérisé en ce que l'élément de serrage (4) possède une barre en coin (41) éventuellement interrompue par un évidement (401) et qui forme, par sa forme de préférence prismatique, un bord de serrage (402) qui saisit le rail profilé (7), et fait saillie des deux côtés par rapport à un corps de serrage (43), qui est également associé à l'élément de serrage (4) et est situé entre les barrettes de guidage (38) et forme, avec des épaulements (42) situés sur sa face arrière, une butée qui, dans la position ouverte, s'applique contre l'extrémité associée des barrettes de guidage (38).

16. Boîtier selon l'une des revendications précédentes, caractérisé en ce que l'élément de serrage (4) comporte des premiers rails de guidage (46), qui permettent un mouvement de glissement entre les barrettes de guidage (38) dans les rainures de guidage (39), et que ce mouvement de glissement est limité par une butée, qui forme au moins un crochet coulissant (44) qui, lors de l'enfoncement de l'élément de serrage (4) dans les rainures de guidage (39), s'engage dans un trou d'encliquetage (302) de la plaque de fond (32) du support de rail (3) et, dans la direction de serrage, empêche un dégagement indésirable de glissement hors des rainures de guidage (39).

17. Boîtier selon l'une des revendications précédentes, caractérisé en ce que des fenêtres (45) pour le crochet sont aménagées dans le corps de serrage (43) de l'élément de serrage (4) pour libérer les crochets coulissants (44), et qu'un trou (47) pour ressort est prévu pour loger une extrémité du ressort (6) disposé entre l'élément de serrage (4) et l'élément d'arrêt (5).

18. Boîtier selon l'une des revendications précédentes, caractérisé en ce que sur le corps de serrage (43), de préférence dans la zone des premiers rails de guidage (46), est formé respectivement un appendice saillant de saisie (49), sur lequel peut s'accrocher un bras de saisie (53) de l'élément d'arrêt (5).

19. Boîtier selon l'une des revendications précédentes, caractérisé en ce que l'élément d'arrêt (5) équipé de deux rails de guidage (501) est disposé, conformément à l'élément de serrage (4), de manière à pouvoir se déplacer par glissement dans les rainures de guidage (39), et les bras de saisie (53) utilisés pour l'accouplement à l'élément de serrage (4) comportent, sur leur extrémité tournée vers l'élément de serrage (4), des crochets de saisie (54) et, sur leur extrémité fixée sur le coulisseau (51), des épaulements (55) du bras de saisie, et que ces crochets et épaulements empêchent, conjointement avec une butée (301) formée dans chaque rainure de guidage (39), un dégagement par glissement de l'élément d'arrêt (5) hors de la rainure de guidage (39), dans la direction d'ouverture.

20. Boîtier selon l'une des revendications précédentes, caractérisé en ce que l'élément d'arrêt (5) possède une patte élastique d'arrêt (52), qui est montée de manière à pouvoir osciller dans une fenêtre (58) servant à loger cette patte et qui comporte au moins une dent d'encliquetage (56,57), qui s'engage dans un auget d'encliquetage (303) et bute contre un bord de butée (306), et que sur l'extrémité libre de la patte d'arrêt (52) est prévue une barrette d'actionnement (504), qui permet un accès tel que la patte d'arrêt (52) est dégagée de sa position en butée, à l'encontre de sa force de ressort, et permet par conséquent un nouveau déplacement de l'élément d'arrêt (5).

21. Boîtier selon l'une des revendications précédentes, caractérisé en ce que, lorsque les deux éléments (4,5) sont dans la troisième position, l'élément d'arrêt (5) fait saillie, par son extrémité libre, au-delà de l'extrémité du support de rail (3), et par conséquent également par rapport à la surface de base du corps de boîtier (1), et, dans cette position, permet de fixer le corps de boîtier (1), de préférence à l'aide de trous correspondants (502,503), à une surface de paroi ou de sol ne comportant aucun rail profilé, et qu'un logement de ressort (59) est utilisé, sur le côté du coulisseau (51) tourné vers l'élément de serrage (4), pour loger l'autre extrémité du ressort (6).
